# EUROPÄISCHE PATENTSCHRIFT

(11) **EP 1 141 594 B1**
(45) Veröffentlichungstag und Bekanntmachung des Hinweises auf die Patenterteilung: **12.01.2005**
(21) Anmeldenummer: 00987123.7
(22) Anmeldetag: 02.11.2000
(51) Int. Cl.: F16J 15/10, E21D 11/38, B29C 70/88

(54) **DICHTRAHMEN**
SEALING FRAME
CADRE D'ETANCHEITE

(30) Priorität: 09.11.1999 DE 19953964
(43) Veröffentlichungstag der Anmeldung: 10.10.2001
(73) Patentinhaber: Phoenix AG, 21079 Hamburg (DE)
(72) Erfinder: DEGEL, Werner, 21244 Buchholz (DE)
(86) Internationale Anmeldenummer: PCT/DE2000/003975
(87) Internationale Veröffentlichungsnummer: WO 2001/035007

(56) Entgegenhaltungen:
- DE-A- 19 651 733
- FR-A- 2 322 725
- GB-A- 1 059 523
- US-A- 4 946 309

## Beschreibung

Die Erfindung betrifft einen Dichtrahmen aus elastomerem Werkstoff auf Basis einer Elastomermischung, umfassend Dichtprofile und Rahmenecken, wobei der Elastomermischung für die Rahmenecken ein Zusatzstoff beigemischt ist, der die Wärmeleitfähigkeit der Elastomermischung erhöht.

Ein Dichtahmen der oben genannten Art wird in der Druckschrift GB-A-1 059 523 beschrieben. Die Dichtung besteht aus einem flexiblen und plastischen Werkstoff, dem ein Metallpulver beigemischt ist, und zwar insbesondere zwecks Erhöhung der elektrischen Leitfähigkeit wie auch der Druckfestigkeit.

Ein Dichtrahmen kommt in vielseitiger Weise zur Anwendung, wobei im folgenden einige Verwendungsmöglichkeiten vorgestellt werden:
- Segmente (Tübbinge) aus Beton, Stahlbeton oder anderen Baumaterialien, die zu einem rohrförmigen Tunnel zusammengesetzt sind, werden zwecks Abdichtung des Spaltes zwischen den aneinanderstoßenden Segmenten mit einem Dichtrahmen ausgestattet (US-A-4 946 309). Da die Segmente zumeist vier Stoßseiten besitzen, besteht der Dichtrahmen aus vier zusammengesetzten Dichtprofilen und vier Rahmenecken. Dabei werden die Dichtprofile durch Extrusion hergestellt. Die Rahmenecken selbst werden vorzugsweise nach dem Injection-Molding-Verfahren hergestellt. Die hierzu erforderliche Elastomermischung wird auch als Eindüsmischung bezeichnet. Die Rahmenecken nennt man daher auch Eindüsecken.
- In der Druckschrift EP-B-0 399 353 wird ein Doppeldichtrahmen für Container, insbesondere Kühlcontainer, vorgestellt, wobei die Dichtprofile zu einem Dichtrahmen mit Rahmenecken zusammengefügt werden können.
- Dichtprofile können femer zu einem Dichtrahmen für Kfz-Fenster zusammengesetzt werden, wobei beispielsweise auf die Druckschrift DE-C-39 29 159 verwiesen wird.

Im Hintergrund dieses Standes der Technik wird nun folgende Problematik angesprochen.

Die Heizzeit von Rahmenecken ist begrenzt durch die Vulkanisationszeit T₉₀ bei entsprechenden Temperaturen. Die Bezeichnung T₉₀ bedeutet dabei, daß die

Elastomermischung zu 90 % vulkanisiert ist. Bevor die Mischungen ausvulkanisieren, müssen sie eine bestimmte Fließzeit besitzen, um die Form vollständig auszufüllen.

Da Elastomermischungen schlechte Wärmeleiter sind, benötigen vor allem voluminöse Rahmenecken relativ viel Zeit, um auch im Kern auszuvulkanisieren. Nachteilig ist femer, daß das physikalische Datenniveau verschieden ist, da die zugeführte Wärmemenge über den Querschnitt unterschiedlich ist.

Die Aufgabe der Erfindung besteht nun darin, die Heizzeit einer Elastomermischung für die Herstellung der Rahmenecken eines Dichtrahmens zu verkürzen.

Gelöst wird diese Aufgabe dadurch, daß der Zusatzstoff Graphit ist und in einer Menge von 10 bis 30 phr (per hundred rubber) beigemischt ist.

Vorteilhafterweise beträgt der Mengenanteil an Graphit 15 bis 25 phr.

Mit dem neuen Dichtrahmen läßt sich die Heizzeit bis zu 50 % reduzieren, ohne daß es zu wesentlichen Einbußen der physikalischen Daten kommt.

Die Erfindung wird nun anhand eines Ausführungsbeispieles unter Bezugnahme auf schematische Zeichnungen erläutert. Es zeigen:
- Fig. 1: einen Dichtrahmen für Tübbinge;
- Fig. 2: den Querschnitt des Dichtrahmens in Bezug auf die Schnittlinie A-A (Fig. 1).

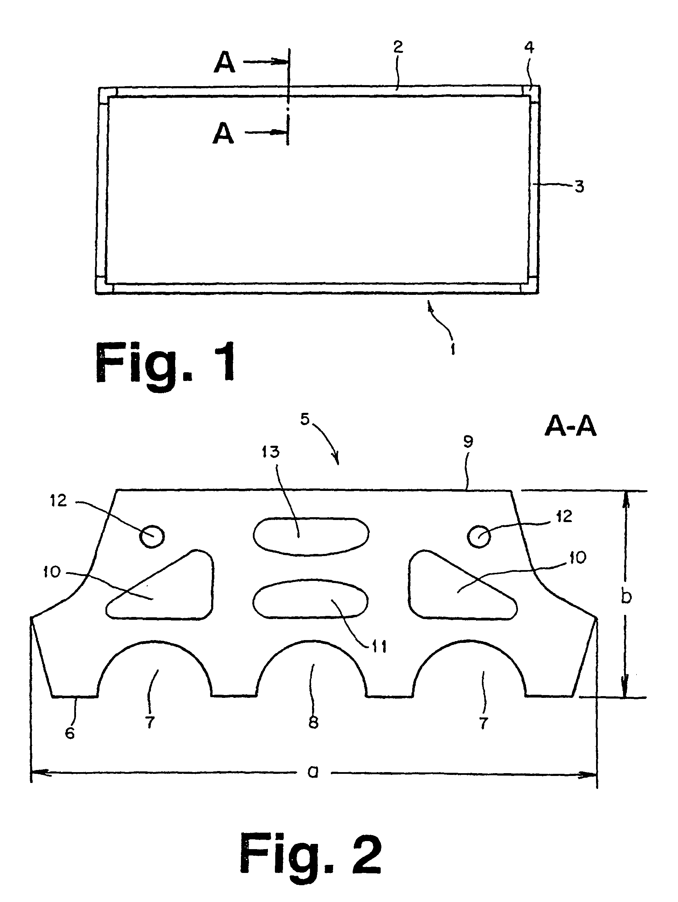

Nach Fig. 1 besteht der Dichtrahmen **1** aus elastomerem Werkstoff, d.h. aus Gummi oder gummiähnlichem Kunststoff, aus vier Dichtprofilen **2** und **3** sowie aus vier Rahmenecken **4**. Die Dichtprofile werden durch Extrusion hergestellt und vulkanisiert und letztlich entsprechend der Rahmendimension auf die erforderliche Länge zugeschnitten. Die Rahmenecken selbst werden mittels eines Formwerkzeuges, umfassend eine Innenform und Außenform mit Eindüskanal sowie ein Formnest, hergestellt, und zwar bei stoffschlüssigem Verbund mit den Dichtprofilen.

Fig. 2 zeigt den Querschnitt eines Dichtprofiles **5** mit der maximalen Breite a und der maximalen Profildicke **b** (im unbelasteten Zustand), die sich von der Profilbasisseite **6** bis zum Profilrücken **9** erstreckt. Zwecks Verbesserung der Kompressionswirkung ist das Dichtprofil mit Rillennuten **7** und **8** sowie mit Kanälen **10, 11, 12** und **13** in zweireihiger Anordnung ausgestattet.

Die Rahmenecken **4** gemäß Fig. 1 weisen dagegen keine Kanäle auf, jedoch Rillennuten, die mittels einer entsprechenden Gestalt der Innenform gebildet werden können.

Über den Düskanal des Formwerkzeuges wird die neue Elastomermischung in das Formnest eingebracht, verbunden mit einer anschließenden Vulkanisation unter Reduzierung der Heizzeit.

Mit dieser Elastomermischung können alle möglichen Formen von Rahmenecken hergestellt werden, beispielsweise das Zusammenfügen eines Dichtprofiles in Form eines Extrudates mit einem Dichtprofil, das ein Formartikel ist.

Auch U-förmige Dichtrahmen sowie andere Rahmenkonstellationen sind hiermit erreichbar.

Von besonderer Bedeutung ist jedoch die Herstellung der Ecken von Tunneldichtrahmen und Containerdichtrahmen, da hier besonders hohe Dichtleistungen gefordert werden, was auch auf die Rahmenecken zutrifft.

## Patentansprüche

1. Dichtrahmen (1) aus elastomerem Werkstoff auf Basis einer Elastomermischung, umfassend Dichtprofile (2, 3, 5) und Rahmenecken (4), wobei der Elastomermischung für die Rahmenecken (4) ein Zusatzstoff beigemischt ist, der die Wärmeleitfähigkeit der Elastomermischung erhöht, **dadurch gekennzeichnet, daß** der Zusatzstoff Graphit ist und in einer Menge von 10 bis 30 phr beigemischt ist.

2. Dichtrahmen nach Anspruch 1, **dadurch gekennzeichnet, daß** der Zusatzstoff beim Einmischen pulverförmig vorliegt.

3. Dichtrahmen nach Anspruch 1 oder 2, **dadurch gekennzeichnet, daß** der Zusatzstoff in einer Menge von 15 bis 25 phr beigemischt ist.

4. Dichtrahmen nach einem der Ansprüche 1 bis 3, **dadurch gekennzeichnet, daß** die Elastomermischung zur Herstellung der Ecken von Tunneldichtrahmen verwendet wird.

5. Dichtrahmen nach einem der Ansprüche 1 bis 3, **dadurch gekennzeichnet, daß** die Elastomermischung zur Herstellung der Ecken von Containerdichtrahmen verwendet wird.

## Claims

1. Sealing frame (1) made of elastomer material based on an elastomer mixture, comprising sealing profiles (2, 3, 5) and frame corners (4), the elastomer mixture for the frame corners (4) being mixed with an additive which increases the thermal conductivity of the elastomer mixture, **characterised in that** the additive is graphite and added in a quantity of 10 to 30 phr.

2. Sealing frame according to claim 1, **characterised in that** when it is mixed in, the additive is present in powder form.

3. Sealing frame according to claim 1 or 2, **characterised in that** the additive is added in a quantity of 15 to 25 phr.

4. Sealing frame according to one of claims 1 to 3, **characterised in that** the elastomer mixture is used to manufacture the corners of tunnel sealing frames.

5. Sealing frame according to one of claims 1 to 3, **characterised in that** the elastomer mixture is used to manufacture the corners of container sealing frames.

## Revendications

1. Cadre d'étanchéité (1) en matériau élastomère à base d'un mélange d'élastomères, comprenant des profilés d'étanchéité (2, 3, 5) et des pièces d'angle de cadre (4), au mélange d'élastomères prévu pour les pièces d'angle (4) étant ajouté en mélange un additif augmentant la conductivité thermique du mélange d'élastomères, **caractérisé en ce que** l'additif est du graphite et est ajouté en mélange en une quantité de 10 à 30 phr.

2. Cadre d'étanchéité selon la revendication 1, **caractérisé en ce que** l'additif se présente sous forme pulvérulente au moment de l'introduction dans le mélange.

3. Cadre d'étanchéité selon la revendication 1 ou 2, **caractérisé en ce que** l'additif est ajouté lors du mélange en une quantité de 15 à 25 phr.

4. Cadre d'étanchéité selon l'une des revendications 1 à 3, **caractérisé en ce que** le mélange d'élastomères est utilisé pour la fabrication des pièces d'angle de cadre d'étanchéité pour tunnels.

5. Cadre d'étanchéité selon l'une des revendications 1 à 3, **caractérisé en ce que** le mélange d'élastomère est utilisé pour fabriquer les pièces d'angle de cadres d'étanchéité de conteneurs.
